# EUROPEAN PATENT SPECIFICATION

(11) **EP 2 644 308 B1**
(45) Date of publication and mention of the grant of the patent: **29.06.2016**
(21) Application number: 13161507.2
(22) Date of filing: 28.03.2013
(51) Int. Cl.: B23K 26/00, B23K 26/12, B23K 26/36, B23K 26/03

(54) **Apparatus for and method of protecting light optical components during laser ablation**
Vorrichtung und Verfahren zum Schutz lichtoptischer Komponenten bei Laserablation
Appareil et méthode de protection de composants optiques de lumière pendant une ablation par laser

(30) Priority: 31.03.2012 US 201261618772 P
(43) Date of publication of application: 02.10.2013
(73) Proprietor: FEI COMPANY, Hillsboro, Oregon 97124-5793 (US)
(72) Inventor: Straw, Marcus, Portland, OR Oregon 97212 (US)
(74) Representative: Bakker, Hendrik

(56) References cited:
- FR-A- 1 465 435
- JP-A- S 613 101
- JP-A- H0 929 474
- JP-A- S5 747 594
- JP-A- S63 109 463
- JP-A- 2004 090 060
- US-A1- 2011 248 164
- US-B1- 6 437 285

## Description

The present invention relates to an apparatus for and a method of performing laser ablation in a vacuum chamber according to the preamble of claims 1 and 11 (see, for example, JP557/047594A).

### BACKGROUND OF THE INVENTION

Charged particle beam systems are used in a variety of applications, including the manufacturing, repair, and inspection of miniature devices, such as integrated circuits, magnetic recording heads, and photolithography masks. Charged particle beams include ion beams and electron beams.

Ions in a focused beam typically have sufficient momentum to micromachine by physically ejecting material from a surface. Because electrons are much lighter than ions, electron beams are typically limited to removing material by inducing a chemical reaction between an etchant vapor and the substrate. Both ion beams and electron beams can be used to image a surface at a greater magnification and higher resolution than can be achieved by the best optical microscopes.

Ion beam systems using gallium liquid metal ion sources (LMIS) are widely used in manufacturing operations because of their ability to image, mill, deposit, and analyze with great precision. Ion columns in focused ion beam (FIB) systems using gallium LMIS, for example, can provide five to seven nanometers of lateral resolution. Because ion beams tend to damage sample surfaces even when used to image, ion beam columns are often combined with electron beam columns in dual beam systems. Such systems often include a scanning electron microscope (SEM) that can provide a high-resolution image with minimal damage to the target, and an ion beam system, such as a focused or shaped beam system, that can be used to alter workpieces and to form images. Dual beam systems including an LMIS FIB and an electron beam are well known. For example, such systems include the Quanta 3D FEG™ System, available from FEI Company of Hillsboro, OR, the assignee of the present invention. The ion beam can be used, for example, to cut a trench in an integrated circuit, and then the electron beam can be used to form an image of the exposed trench wall.

Unfortunately, high-precision milling or sample removal often requires some tradeoffs. The processing rate of the LMIS FIB is limited by the current in the beam. As the current is increased, it is harder to focus the beam into a small spot. Lower beam currents allow higher resolution, but result in lower milling rates and hence longer processing times in production applications and in laboratories. As the processing rate is increased by increasing the beam current, the processing precision is decreased.

Further, even at higher beam currents, focused ion beam milling may still be unacceptably slow for some micromachining applications. Other techniques, such as machining with a femtosecond laser can also be used for faster material removal but the resolution of these techniques is much lower than a typical LMIS FIB system. Lasers are typically capable of supplying energy to a substrate at a much higher rate than charged particle beams, and so lasers typically have much higher material removal rates (typically up to 7 x 106 µm3/s for a 1 Watt laser operating at a1 kHz laser pulse repetition rate) than charged particle beams (typically 0.1 to 3.0 µm3/s for a gallium LMIS FIB). Laser systems use several different mechanisms for micromachining, including laser ablation, in which energy supplied rapidly to a small volume causes atoms to be explosively expelled from the substrate. All such methods for rapid removal of material from a substrate using a laser beam will be collectively referred to herein as laser beam machining.

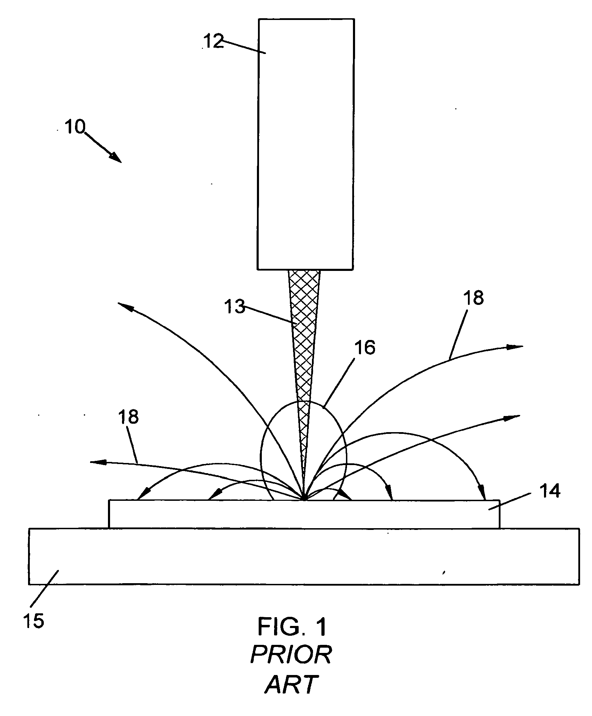

FIG. 1 is a schematic illustration 10 of a prior art laser ablating a surface. When a high power pulsed laser 12 producing laser beam 13 is focused onto a target material 14 supported by a stage 15 and the laser fluence exceeds the ablation threshold value for the material, chemical bonds in the target material are broken and the material is fractured into energetic fragments, typically a mixture of neutral atoms, molecules, and ions, creating a plasma plume 16 above the material surface. Since the material leaves the reaction zone as an energetic plasma, gas, and solid debris mixture, the ablation process resembles explosive evaporation of the material that propels material fragments 18 up and away from the point where the laser beam 13 is focused.

As compared to charged particle beam processing, laser ablation is capable of removing a relatively massive amount of material very quickly, with material removal rates more than 106x faster than a Ga LMIS FIB. The wavelength of light in the laser beam, however, is much larger than the wavelength of the charged particles in the charged particle beams. Because the size to which a beam can be focused is, in part, limited by the beam wavelength, the minimum spot size of a laser beam is typically larger than the minimum spot size of a charged particle beam. Thus, while a charged particle beam typically has greater resolution than a laser beam and can micromachine extremely small structures, the beam current is limited and the micromachining operation can be unacceptably slow. Laser micromachining, on the other hand, is generally much faster, but has poorer resolution due to diffraction.

Unfortunately, laser ablation, because of the large volume of debris produced, can tend to result in the gradual coating of the laser objective lens with debris, which ultimately degrades the performance of the laser. For laser ablation performed at atmosphere, a gas is typically blown across the surface to keep the debris away from the lens. Also, replaceable glass cover slips are sometimes used to cover the lens. Neither of these techniques can be easily used in a combined charged particle beam/laser system, however. The use of a gas is not practical because the sample chamber must be under vacuum for charged particle beam operation. Also, the use of glass covers is impractical; both because it requires venting the sample chamber to atmosphere to replace the covers and also because glass suffers from a very undesirable charging effect that will degrade the operation of the charged particle beam, especially for imaging purposes.
JPS57 047594 A for a "Laser Working Device" describes a laser deposition system that uses a laser to melt a surface of a target to produce material for deposition. JPS57 047594 A uses a rotating glass to protect the window through which the laser enters the vacuum chamber. Material from the laser target is vapor deposited onto an exposed portion of the rotating glass, occluding the exposed portion overtime. The occluded portion can be rotated away from the window and a clean portion that has been shielded from deposition can be rotated into position to protect the window.
JP61-003101 for a "Laser Optical Device" describes a photocopy system in which a laser impinges on a photosensitive body and a developer, such as toner, is contacted to the photosensitive body. The laser is transmitted to the photosensitive body through a conductive glass to which the toner will not adhere. JP63-109463 for an "Image Forming Device" similarly a conductive layer to which a voltage can be applied to prevent toner dispersion

What is needed is a method and apparatus for protecting the laser optics from the build-up of debris during laser ablation in a charged particle system and preventing the resulting gradual degradation of the laser beam intensity.

### SUMMARY OF THE INVENTION

An object of the invention is to provide a method and apparatus for performing laser ablation within a vacuum chamber in a charged particle beam system while simultaneously protecting the light optical components of the apparatus utilized to focus the laser from being coated with debris resulting from the ablation process. The present invetion describes an apparatus according to claim 1 and a method according to claim 11. According to preferred embodiments of the present invention, a protective transparent screen is used to shield the laser optical components. A preferred screen could be replaced or repositioned without breaking vacuum in the sample chamber and would not be particularly susceptible to undesirable charging effects.

The foregoing has outlined rather broadly the features and technical advantages of the present invention in order that the detailed description of the invention that follows may be better understood. Additional features and advantages of the invention will be described hereinafter. It should be appreciated by those skilled in the art that the conception and specific embodiments disclosed may be readily utilized as a basis for modifying or designing other structures for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more thorough understanding of the present invention, and advantages thereof, reference is now made to the following descriptions taken in conjunction with the accompanying drawings, in which:
FIG. 1 is a schematic illustration of a prior art laser ablating a surface;
FIG. 2 is a schematic illustration of a combination SEM and laser according a preferred embodiment of the present invention;
FIG. 3A is a schematic illustration of a combination dual beam FIB/SEM with a confocal laser;
FIG 3B shows the system of FIG. 3A with the sample tilted to be normal to the laser and with the laser ablating the sample surface;
FIG 3C shows the system of FIG. 3A including a protective screen assembly according to a preferred embodiment of the present invention;
FIG. 4A is an expanded view of one preferred embodiment of the invention in which the lens is protected by a rotatable transparent screen;
FIG. 4B is a close-up view of a protective screen assembly installed on a laser lens assembly according to a preferred embodiment of the present invention;
FIG. 5 is an expanded view of another embodiment of the invention in which a transparent conducting material is scrolled across the face of the laser objective lens;
FIG. 6 is a schematic view of one preferred embodiment of the invention in which charged particles are generated, collimated, and enter the sample chamber to strike the sample at a close vicinity to the laser ablating the sample; and
FIG. 7 is a schematic view of one preferred embodiment of the invention in which a beam splitter and detector are used to determine when the transparent screen of the protective screen assembly should be moved or replace to maintain a clean portion of the transparent screen covering the objective lens according to a preferred embodiment of the present invention.

The accompanying drawings are intended to aid in understanding the present invention and, unless otherwise indicated, are not drawn to scale. In the drawings, each identical or nearly identical component that is illustrated in various figures is represented by a like numeral. For purposes of clarity, not every component may be labeled in every drawing.

### DETAILED DESCRIPTION OF PREFERRED EMBODIMENTS

Applicants have discovered that the use of laser ablation within a vacuum chamber involves difficulties with debris buildup on the laser optics that are not seen in atmospheric laser ablation. Not only are the common methods for mitigating debris buildup not practical for ablation formed inside a vacuum chamber, as discussed above, but the problem is actually greater for ablation performed in a vacuum because debris will actually travel farther since it is not slowed by collisions with gas molecules in the atmosphere.

Preferred embodiments of the present invention thus provide a protective transparent screen that can be used to shield the laser optical components during laser ablation. Preferred embodiments should be easily replaced or repositionable without breaking vacuum in the sample chamber.

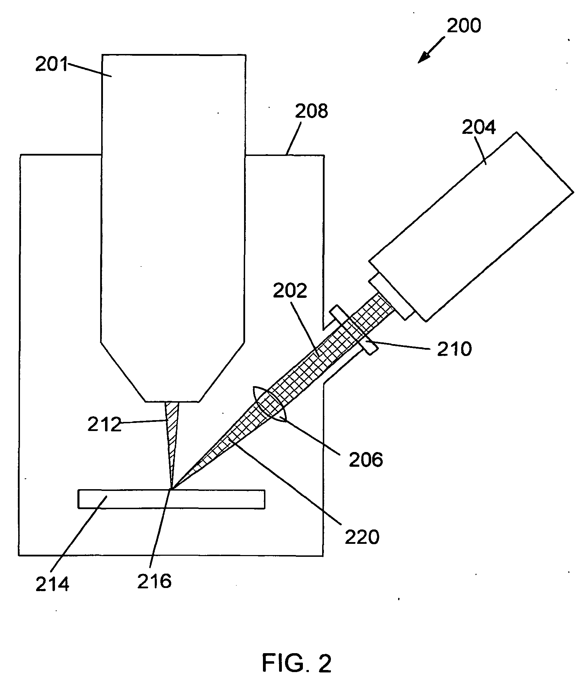

FIG. 2 shows a dual beam system having a combination charged particle beam column 201 and laser 204. Such a dual beam system is described in U.S. Pat. App. No. 2011/0248164 by Marcus Straw et al., for "Combination Laser and Charged Particle Beam System," which is assigned to the assignee of the present application, and which is hereby incorporated by reference. As shown in the schematic drawing of FIG. 2, the laser beam 202 from laser 204 is focused by lens 206 located inside the vacuum chamber 208 into a converging laser beam 220. The laser beam 202 enters the chamber through a window 210. In the embodiment of FIG. 2, a single lens 206 or group of lenses (not shown) located adjacent to the charged particle beam 212 is used to focus the laser beam 220 such that it is either coincident and confocal with, or adjacent to, the charged particle beam 212 (produced by charged particle beam focusing column 201) as it impacts the sample 214 at location 216.

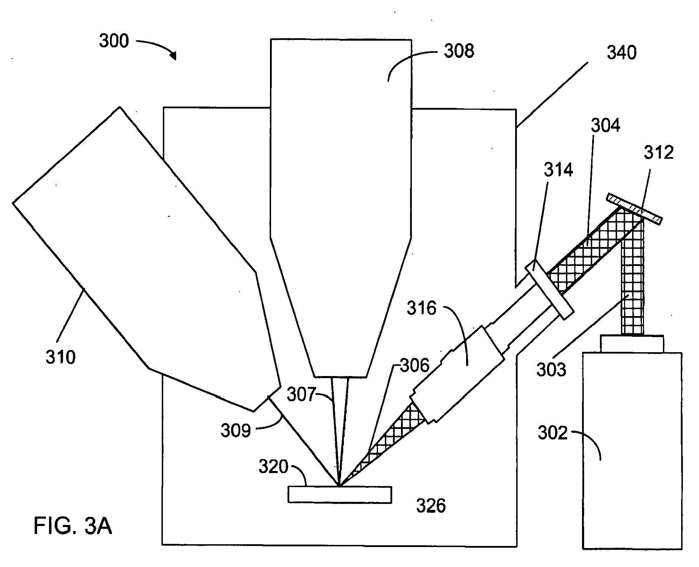

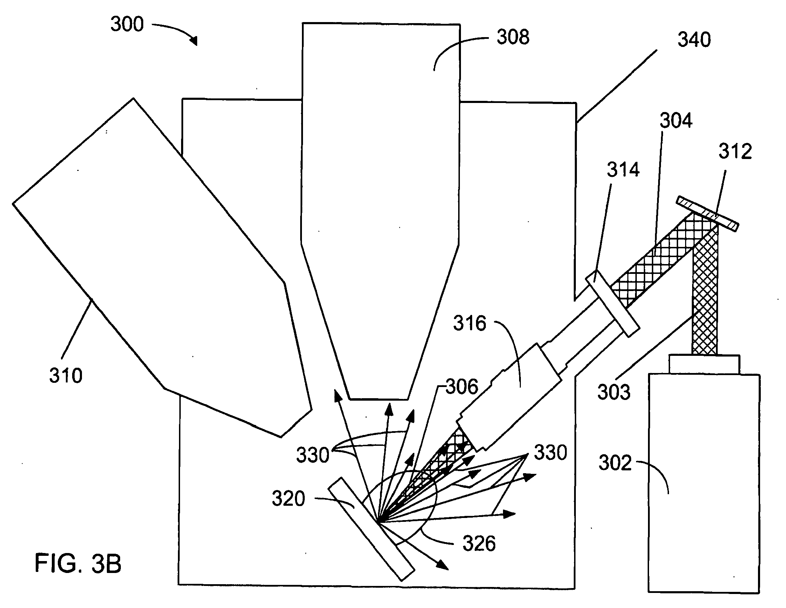

FIGS. 3A and 3B show a system 300 that combines a focused laser beam 306 (produced by a laser 302) for rapid material removal with a focused ion beam 307 (produced by a FIB column 308) for further material processing and an electron beam 309 (produced by a SEM column 310) for monitoring the material removal process. Such a system is also described in U.S. Pat. App. No. 2011/0248164. A laser 302 directs a laser beam 303 towards a mirror 312, which reflects the laser beam 303 to form reflected beam 304 directed through transparent window 314 in vacuum chamber 340. By "transparent" it is meant that the window is transparent to wavelengths of the particular type of laser being used. A lens 316 focuses the reflected laser beam 304 (which may be substantially parallel) into a focused laser beam 306 with a focal point at or near to the surface of a sample 320, which as shown in FIG. 3B is tilted so that the sample surface is normal to the focused laser beam 306.

Mirror 312 (or a similar reflecting element) can also be used to adjust the position of the focused laser beam 306 on the sample 320. Focused laser beam 306 is preferably capable of being operated at a fluence greater than the ablation threshold of the material in sample 320 being machined. According to the present invention, a nanosecond to femtosecond, pulsed laser beam is used to ablate substrate material.

The ablation threshold is an intrinsic property of the substrate material, and skilled persons can readily determine empirically or from the literature the ablation threshold for various materials. A silicon substrate, for example, has a single pulse ablation threshold of about 170 mJ/cm², and so the laser fluence should preferably be just above this value for micromachining silicon in accordance with preferred embodiments of the present invention. A laser beam suitable for rapid material ablation might have energy in the range of 50 nJ to 1 mJ, and a fluence in the range of 0.1 J/cm² to 100 J/cm².

During operation of the laser, a mixture of neutral atoms, molecules, electrons, and ions, exits the surface of sample 320 due to the impact of focused laser beam 306 creating a plasma plume 326 above the sample surface 320. Since the material leaves the reaction zone as a mixture of energetic plasma, gas, and solid debris, the ablation process resembles explosive evaporation of the material and propels material fragments up and away from the point where the focused laser beam 306 is focused. This sudden generation of large numbers of electrons and ions (the plasma plume) tends to scatter debris in all directions around the focus point of the laser. Because the sample chamber is under vacuum (for example so that one or both of the charged particle beams can be used to monitor the ablation process) the ejected debris will travel further than would be the case at higher pressures where more gas molecules are present to slow down the debris. As shown by arrows 330 some percentage of the ejected debris will wind up being deposited on the laser-focusing lens 316. The distribution of the debris has a strong normal component, which means when the laser is used as shown in FIG. 3B (with the beam normal to the surface) a larger percentage of the debris will be directed at the laser focusing lens 316. As the amount of debris on the lens gradually increases, the performance of the laser will be degraded. Eventually enough of the laser light will be blocked so that the laser will no longer properly ablate the sample surface.

The actual percentage of laser transmission required will vary for a given application. As used herein, the term "occluded" will be used to describe the lens (or the combination of lens and protective screening as described below) when the amount of transmitted laser light is so degraded by the buildup of debris that it is not sufficient for a particular application. The term "non-occluded) will be used to describe the lens (or the combination of lens and protective screening as described below) that is either completely clear of any build-up of debris or where the build-up is small enough that the amount of transmitted laser light is sufficient for the particular application.

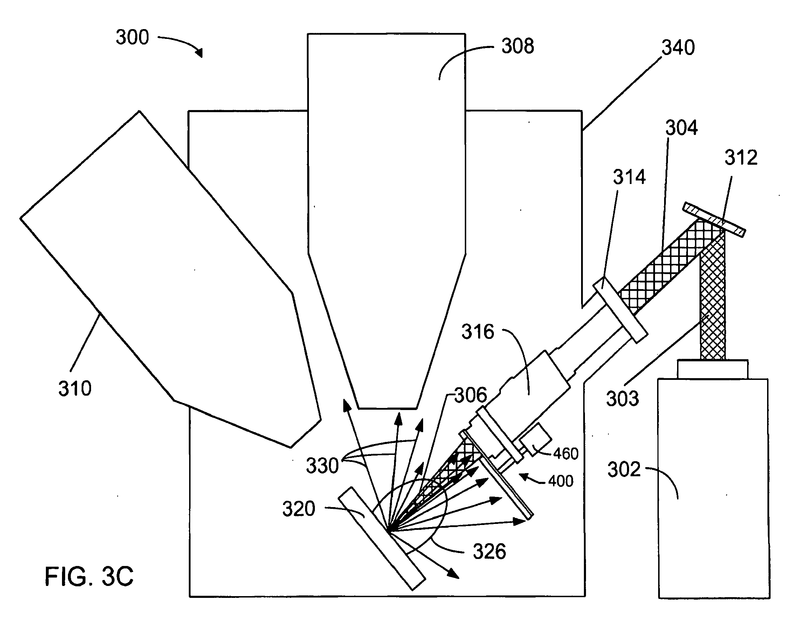

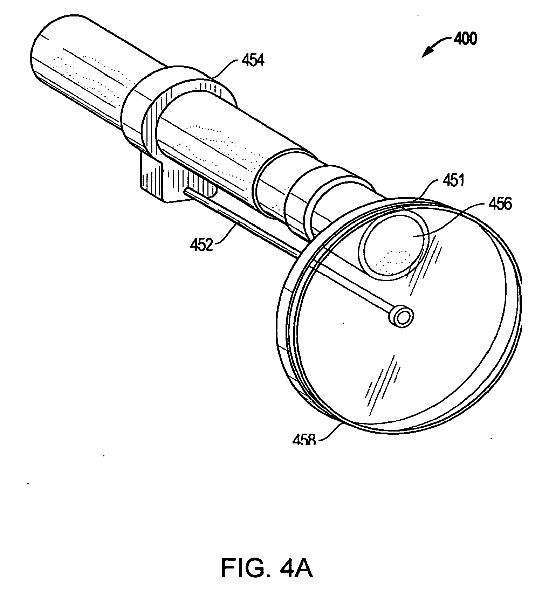

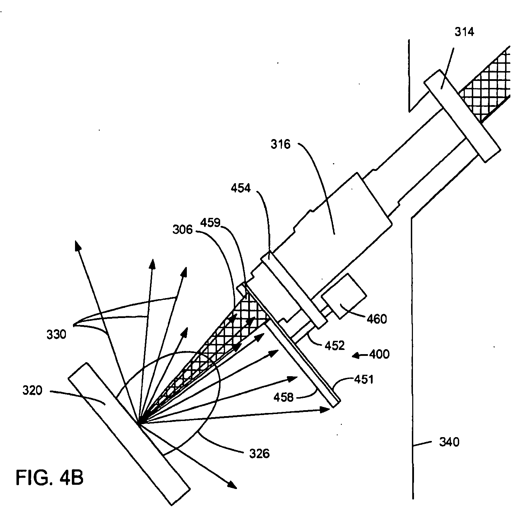

FIG. 3C shows the system of FIGS. 3A and 3B including a protective screen assembly according to a preferred embodiment of the present invention. FIG. 4 shows a larger view of a preferred embodiment of a protective screen assembly 400 that can be used to protect the laser lens from debris buildup. FIG. 4B is a close-up view of a protective screen assembly installed on a laser lens assembly according to a preferred embodiment of the present invention. In the embodiments of FIGS. 3C, 4A, and 4B, transparent screen 451 can be formed from a typical optical flat, which is an optical-grade disc of quartz or some other transparent material polished to be extremely flat on one or both sides and used with a monochromatic light to determine the flatness of other optical surfaces by interference.

Applicants have also discovered, however, that the use of transparent insulating material-like the glass covers commonly used for laser ablation at atmosphere-cause problems when used in a charged particle beam system. Glass, or other insulating materials, tends to build up a charge during operation of the charged particle beam system. Charging is the result of either secondary or back-scattered electrons ejected from the sample during electron or ion beam irradiation or photoelectrons ejected from the sample during laser ablation. When these charged particles land on a surface made of an insulating material such as glass, they become immobile (i.e. they are not conducted away as they would be on a surface made of a conducting material, such as a metal). Over time, as more and more electrons collect on the surface, a large electric field develops. This field interacts with the primary charged particle beam, distorting its shape and displacing it on the sample, eventually degrading the system's performance.

Build-up of charge on the surface of the lens used to focus the laser beam is particularly problematic in a charged particle beam system because of the desirability of using high numerical aperture lenses that allow for a long working distance. Because space is at such a premium inside a charged particle beam vacuum chamber, it is highly desirable to use a lens to focus the laser beam that can be positioned as far back as possible from the sample and yet still adequately resolve the laser beam. Such lenses tend to have a relatively large glass lens surface as compared to other laser focusing lenses. This, of course, results in a much larger surface area having low conductivity on which charging can occur. According to preferred embodiments of the present invention, the side of the transparent screen facing the charged particle beam can be coated with a transparent conductor such as indium tin oxide (ITO) or fluorine doped tin oxide (FTO) in order to counteract this charging effect. In other preferred embodiments of the present invention, the transparent screen can be completely formed from a transparent conductor material such as graphene.

In the assembly of FIG. 4A, transparent screen 451 is attached to a rod 452 such that the transparent screen is removable, either with or without the rod. Referring also to FIG. 4B, the rod 452 is preferably supported by a bracket 454 also attached to the lens assembly, and is operated by a motor 460 that can be used to rotate rod 452, in turn rotating the transparent screen 451. A fixed (i.e. non-rotating) shield 458 with a window having the dimensions of the objective 456, (shown here as semitransparent for clarity) can be located on top of the window, effectively masking the transparent screen everywhere except within opening 459, the region of the transparent screen through which the beam passes. Shield 458 can be formed, for example, from a metal such as stainless steel, or from other suitable materials such as conductive polymers. Debris ejected during ablation will thus strike both the shield 458 and the portion of the transparent screen exposed by opening 459. This preserves the transparency of the transparent screen everywhere except the area where the beam is currently passing.

During laser ablation, the transparent screen will increasingly become coated by ablated material. As the debris coating gets thicker, the laser power delivered to the sample will decrease. In a preferred embodiment, the laser power can be periodically measured as the sample is milled. When the power of the laser beam falls below a predetermined threshold, the transparent screen can be rotated so that the lens opening is covered by a new uncoated region of the transparent screen.

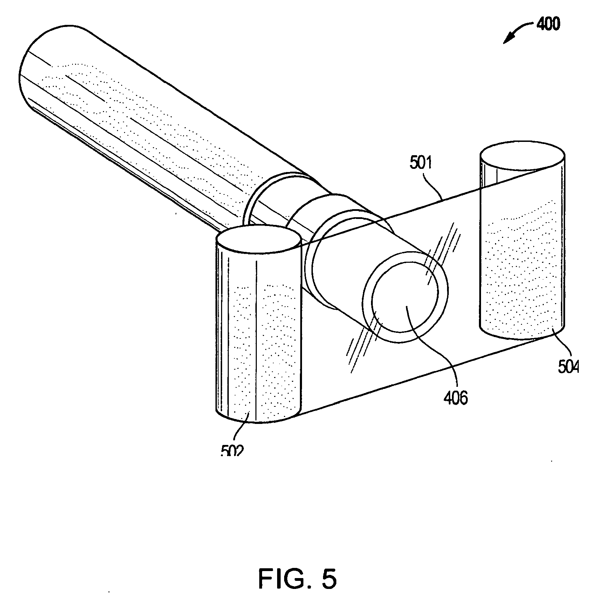

Another embodiment of the invention is illustrated in FIG. 5. Rather than using an optical flat to protect the objective as discussed above, a transparent cover 501 comprising a transparent conducting film can be scrolled across the face of the objective using, for example, a motorized roller system similar to that found in camera film winding systems. Suitable transparent conducting films could include graphene, doped zinc oxide, or a polymer based film such as Poly (3,4-ethylenedioxythiophene) (PEDOT), PEDOT:Polystrene sulfonate (PEDOT:PSS), or Poly 4,4-diocytylcyclopentadithione. A roll of transparent conducting film can be stretched from one cylinder 502 to another cylinder 504. As the power of the beam falls below a predetermined threshold, non-occluded film is unwound from cylinder 502 and collected in cylinder 504, preferably by way of a motorized assembly operated without opening the vacuum chamber. No metal shield is required as cylinder 502 prevents the film from being coated during normal use because the unrolled film remains inside the cylinder where it is not exposed to the ablation debris. The entire assembly consisting of cylinder 502, cylinder 504, and the film is preferably easily replaceable when all of the film has been used.

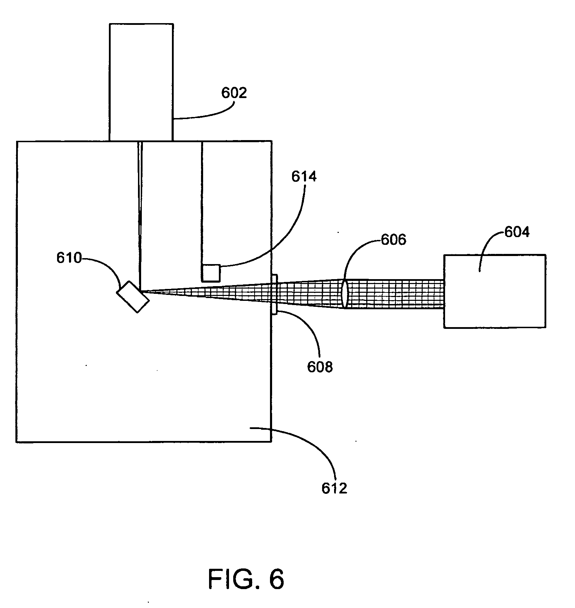

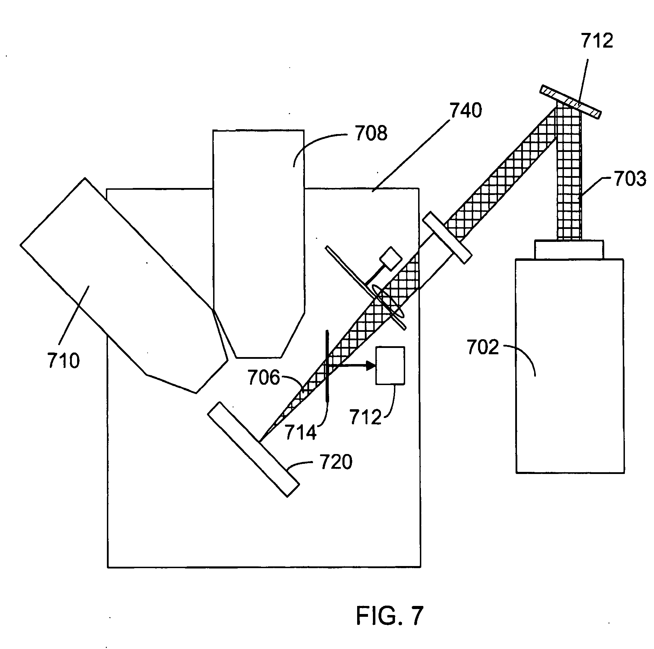

Yet another embodiment of the invention is illustrated in FIG. 6. Charged particles are generated and collimated by the charged particle beam generation system 602 and enter the sample chamber 612 to strike the sample 610. A laser beam is generated by a laser oscillator or amplifier 604 and focused by the focusing optics 606. The laser beam passes through the protective transparent conductive window 608 to strike the sample 610 in the sample chamber 612. As also described below with respect to FIG. 7, a laser detector 614 can be placed in the sample chamber and periodically swung into position to measure the power of the incoming laser beam being generated. The protective conductive window 608 is replaceable. In some preferred embodiments, window 608 is also slideable similar to the embodiments described above or can be replaced from outside the vacuum chamber without losing vacuum.

Yet another embodiment of the invention is illustrated in FIG. 7. In the preferred embodiment of FIG. 7, a beam splitter 714 is placed in the path of the focused laser beam 706 within the vacuum chamber where it splits off a small portion of the laser light (for example ∼ 10%) and directs that portion to a detector 712. The intensity of the laser beam can be measured by the detector and when it falls below a certain threshold, this can be an indicator that the protective screen assembly should be moved so that a clean portion of the transparent screen covers the objective lens or else should be replaced. In some preferred embodiments, the transparent screen can be moved (for example, rotated or unrolled) automatically when the pre-set threshold is reached. Although a small percentage of the laser beam output will be lost to the beam splitter, in most cases the output of the laser can be increased slightly to make up for the split beam. Alternatively, as shown in FIG. 6, a detector can 614 be mounted on a moveable or retractable arm and moved into the focused beam path periodically to measure the laser beam intensity.

According to some embodiments of the present invention, an apparatus for protecting light optical components during ablation, comprises a laser assembly having a light source and focusing optics for producing a focused laser beam; the focusing optics including an objective lens for focusing the laser beam onto a sample within a vacuum chamber; and a replaceable protective screen formed from a transparent material, the protective screen placed between the sample and objective lens so that the focused laser beam passes through the transparent conductive material of the protective screen and so that debris ejected toward the objective lens during laser ablation of the sample strikes the protective screen rather than the objective lens.

In some embodiments, the protective screen can be replaced without breaking vacuum in the sample chamber. In some embodiments, the protective screen can be repositioned so that when the passage of the laser light through the portion of the protective screen covering the objective lens becomes occluded beyond a predetermined threshold, the protective screen can be repositioned so that a non-occluded portion of the protective screen covers the objective lens. In some embodiments, the protective screen can be repositioned without breaking vacuum in the sample chamber.

In some embodiments, the laser assembly is part of a sample processing system which also includes a charged particle beam system. In some embodiments, the transparent conductive material comprises a nonconductive material coated with a layer of a transparent conductor. In some embodiments, the nonconductive material comprises glass and the transparent conductor comprises indium tin oxide or fluorine doped tin oxide.

In some embodiments, the transparent conductive material comprises graphene, doped zinc oxide, or a polymer based film. In some embodiments, the transparent conductive material comprises Poly 3,4-ethylenedioxythiophene (PEDOT), PEDOT:Polystrene sulfonate (PEDOT:PSS), or Poly 4,4-diocytylcyclopentadithione. In some embodiments, the nonconductive material comprises an optical flat.

In some embodiments, the area covered by the protective screen is larger than area of the optical lens and further comprising a shield covering at least a portion of transparent screen not covering the objective lens. In some embodiments, the protective screen is rotatable so that when the portion of the transparent screen covering the objective lens is occluded by debris, the protective screen can be rotated so that a non-occluded portion of the transparent screen formerly covered by the shield is positioned to cover the objective lens.

In some embodiments, the transparent conductive material of the protective screen has a surface area that is larger than the optical lens and the protective screen comprises a roll of flexible transparent material that can be scrolled between the objective lens and the sample surface. In some embodiments, the protective screen can be scrolled across the objective lens so that when the portion of the transparent screen covering the objective lens is occluded by debris, a non-occluded portion can be unrolled and positioned to cover the objective lens.

In some embodiments, the laser objective lens and the protective screen are both positioned inside the vacuum chamber of a charged particle beam system. In some embodiments, the laser objective lens is located outside the vacuum chamber and the laser is focused onto the sample through a transparent window in the vacuum chamber wall and in which the protective screen is located inside the vacuum chamber and protects the transparent window from debris ejected during laser ablation.

In some embodiments, the apparatus further comprises a beam splitter positioned in the path of the laser beam to direct a portion of the laser light toward the detector. In some embodiments, the detector can be moved into the path of the laser beam for measurement and out of the beam path for sample processing.

In some embodiments, the method further comprises using a laser detector to quantify the ablating laser to determine when the occluded transparent conductive material should be replaced.

Although the description of the present invention above is mainly directed at an apparatus, it should be recognized that a method of using the claimed apparatus would further be within the scope of the present invention. Further, it should be recognized that embodiments of the present invention can be implemented via computer hardware or software, or a combination of both. The methods can be implemented in computer programs using standard programming techniques-including a computer-readable storage medium configured with a computer program, where the storage medium so configured causes a computer to operate in a specific and predefined manner-according to the methods and figures described in this Specification. Each program may be implemented in a high level procedural or object oriented programming language to communicate with a computer system. However, the programs can be implemented in assembly or machine language, if desired. In any case, the language can be a compiled or interpreted language. Moreover, the program can run on dedicated integrated circuits programmed for that purpose.

Further, methodologies may be implemented in any type of computing platform, including but not limited to, personal computers, mini-computers, main-frames, workstations, networked or distributed computing environments, computer platforms separate, integral to, or in communication with charged particle tools or other imaging devices, and the like. Aspects of the present invention may be implemented in machine readable code stored on a storage medium or device, whether removable or integral to the computing platform, such as a hard disc, optical read and/or write storage mediums, RAM, ROM, and the like, so that it is readable by a programmable computer, for configuring and operating the computer when the storage media or device is read by the computer to perform the procedures described herein. Moreover, machine-readable code, or portions thereof, may be transmitted over a wired or wireless network. The invention described herein includes these and other various types of computer-readable storage media when such media contain instructions or programs for implementing the steps described above in conjunction with a microprocessor or other data processor. The invention also includes the computer itself when programmed according to the methods and techniques described herein.

Computer programs can be applied to input data to perform the functions described herein and thereby transform the input data to generate output data. The output information is applied to one or more output devices such as a display monitor. In preferred embodiments of the present invention, the transformed data represents physical and tangible objects, including producing a particular visual depiction of the physical and tangible objects on a display.

The invention has broad applicability and can provide many benefits as described and shown in the examples above. The embodiments will vary greatly depending upon the specific application, and not every embodiment will provide all of the benefits and meet all of the objectives that are achievable by the invention.

In the following discussion and in the claims, the terms "including" and "comprising" are used in an open-ended fashion, and thus should be interpreted to mean "including, but not limited to ...". The term "charged particle beam" is used herein to refer to any electron beam or any collimated ion beam, including a beam focused by ion optics and shaped ion beams. The term "Dual Beam" is used herein to refer to any combination system including two beams for sample processing, including a combination FIB/SEM or a charged particle beam coincident to or in the vicinity of a laser beam. To the extent that any term is not specially defined in this specification, the intent is that the term is to be given its plain and ordinary meaning. The accompanying drawings are intended to aid in understanding the present invention and, unless otherwise indicated, are not drawn to scale.

Although the present invention and its advantages have been described in detail, it should be understood that various changes, substitutions and alterations can be made to the embodiments described herein without departing from the scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. An apparatus (300) for performing laser ablation in a vacuum chamber (340):
comprising;
a laser assembly having:
a laser light source (302); and
focusing optics (316) for producing a focused laser beam (303) from the light source,
the focusing optics including an objective lens (316) for focusing the laser beam (303) onto a sample (320) within a vacuum chamber (340)
a replaceable protective screen positioned between the sample and objective lens so that the focused laser beam (303) passes through the replaceable protective screen and so that debris ejected toward the objective lens (316) during laser ablation of the sample (320) strikes the replaceable protective screen;
**characterized in that**:
the light source (302) is a source of a nanosecond to femtosecond, pulsed laser beam;
the replaceable protective screen (451, 501) is formed from a transparent conductive material,
the apparatus includes a charged particle beam column (308, 309) for processing a sample in the vacuum chamber.

2. The apparatus of claim 1 in which the replaceable protective screen (451, 501) can be repositioned without opening the vacuum chamber (340) so that when the passage of the laser light through the portion of the replaceable protective screen (451, 501) covering the objective lens (316) becomes occluded beyond a predetermined threshold, the replaceable protective screen (451, 501) can be repositioned so that a non-occluded portion of the replaceable protective screen (451, 501) covers the objective lens (316).

3. The apparatus of any of the preceding claims in which the transparent conductive material comprises a nonconductive material coated with a layer of a transparent conductor and/or graphene, doped zinc oxide, a polymer based film, Poly 3,4-ethylenedixoythiophene (PEDOT), PEDOT:Polystyrene sulfonate (PEDOT:PSS), or Poly(4,4-dioctylcyclopentadithiophene).

4. The apparatus of claim 1 in which the replaceable protective screen (451, 501) comprises a nonconductive material comprising glass and/or an optical flat, and the transparent conductive material comprises indium tin oxide or fluorine doped tin oxide.

5. The apparatus of any of the preceding claims in which the area covered by the replaceable protective screen (451, 501) is larger than area of the objective lens and further comprising a shield (458) covering at least a portion of transparent screen not covering the objective lens (316).

6. The apparatus of any of the preceding claims in which the replaceable protective screen (451, 501) is rotatable so that when the portion of the transparent screen covering the objective lens (316) is occluded by debris, the replaceable protective screen (451, 501) can be rotated so that a non-occluded portion of the transparent screen formerly covered by a shield is positioned to cover the objective lens (316).

7. The apparatus of any of the claims 1- 5 in which the replaceable protective screen (451, 501) comprises a roll (501) of flexible transparent material that can be scrolled across the objective lens (316) so that when a portion of the transparent screen covering the objective lens (326) is occluded by debris, a non-occluded portion can be unrolled and positioned to cover the objective lens (316).

8. The apparatus of any of the preceding claims in which the objective lens (316) is located outside the vacuum chamber (340) and the laser is focused onto the sample through a transparent window in the vacuum chamber (340) wall and in which the replaceable protective screen (451, 501) is located inside the vacuum chamber and protects the transparent window from debris ejected during laser ablation.

9. The apparatus of any of the preceding claims further comprising a detector (614, 712) located within vacuum chamber (340) to measure an intensity of the focused laser beam to determine when the replaceable protective screen (451, 501) is occluded.

10. The apparatus of claim 9 further comprising a beam splitter (714) positioned in a path of the focused laser beam to direct a portion of the laser light toward the detector (614, 712).

11. A method of performing laser ablation in a vacuum chamber (340) using a focused laser beam (303) produced by a laser (302), comprising directing a laser beam toward a sample to ablate an area of the sample (320):
**characterized in that**: the layer beam (303) is a nanosecond to from to second pulsid layer beam an by
directing the laser beam (303) toward the sample (320) includes directing the laser beam (303) through a transparent conductive material that blocks debris ejected during laser ablation from reaching optical components in a path of the laser beam (303), and
replacing the occluded transparent conductive material with non-occluded transparent conductive material without opening the vacuum chambers as the buildup of debris on the transparent conductive material becomes sufficient to occlude the transparent conductive material.

12. The method of claim 11 in which replacing the occluded transparent conductive material with non-occluded transparent conductive material includes rotating the occluded transparent conductive material out of a position between the laser (302) and the sample (320) and rotating non-occluded transparent conductive material into the position between the laser (309) and the sample (320).

13. The method of claim 11 in which replacing the occluded transparent conductive material with non-occluded transparent conductive material includes scrolling the occluded transparent conductive material out of a position between the laser (309) and the sample (320) and scrolling non-occluded transparent material from a roll into the position between the laser (302) and the sample (320).

14. The method of any of claims 11 to 13 further comprising detecting an intensity of the laser beam (303) to determine when the occluded transparent conductive material should be replaced.

15. The method of any of claim 11 to 14, further comprising generating and collimating a charged particle beam to strike the sample (320) in the vacuum chamber (340).

## Patentansprüche

1. Vorrichtung (300) zum Ausführen einer Laserablation in einer Vakuumkammer (340), mit:
einer Laseranordnung mit:
einer Laserlichtquelle (302); und
einer Fokussieroptik (316) zum Erzeugen eines fokussierten Laserstrahls (303) von der Lichtquelle, wobei die Fokussiersoptik eine Objektivlinse (316) zum Fokussieren des Laserstrahls (303) auf einer Probe (320) innerhalb einer Vakuumkammer (340) aufweist;
einem auswechselbaren Schutzschirm, der zwischen der Probe und der Objektivlinse positioniert ist, so dass der fokussierte Laserstrahl (303) durch den auswechselbaren Schutzschirm hindurchtritt, so dass Verunreinigungen, die während der Laserablation der Probe auf die Objektivlinse (316) geschleudert werden, auf den auswechselbaren Schutzschirm treffen;
**dadurch gekennzeichnet, dass**:
die Lichtquelle (302) eine Quelle eines Nanosekunden- bis Femtosekunden-Pulslaserstrahls ist;
der auswechselbare Schutzschirm (451, 501) aus einem transparenten leitfähigen Material ausgebildet ist;
die Vorrichtung eine Ladungsteilchenstrahlsäule (308, 309) zum Bearbeiten einer Probe in der Vakuumkammer aufweist.

2. Vorrichtung nach Anspruch 1, wobei der auswechselbare Schutzschirm (451, 501) neu positioniert werden kann, ohne die Vakuumkammer (340) zu öffnen, sodass, wenn der Durchtritt des Laserlichts durch den Abschnitt des auswechselbaren Schutzschirms (451, 501), der die Objektivlinse (316) überzieht, über eine vorgegebene Schwelle hinaus okkludiert ist, der auswechselbare Schutzschirm (451, 501) neu positioniert werden kann, sodass ein nicht okkludierter Abschnitt des auswechselbaren Schutzschirms (451, 501) die Objektivlinse (316) überzieht.

3. Vorrichtung nach einem der vorhergehenden Ansprüche, wobei das transparente leitfähige Material ein nichtleitfähiges Material aufweist, das beschichtet ist mit einer Schicht aus einem transparenten Leiter und/oder Graphen, dotiertem Zinkoxid, einem polymerbasierten Film, Poly-3,4-ethylendixoythiophen (PEDOT), PEDOT:Polystyrolsulfonat (PEDOT:PSS) oder Poly-(4,4-dioctylcyclopentadithiophen).

4. Vorrichtung nach Anspruch 1, wobei der auswechselbare Schutzschirm (451, 501) ein nichtleitfähiges Material aufweist, das Glas und/oder eine optische Planfläche aufweist, und das transparente leitfähige Material Indiumzinnoxid oder fluordotiertes Zinnoxid aufweist.

5. Vorrichtung nach einem der vorhergehenden Ansprüche, wobei der Bereich, der mit dem auswechselbaren Schutzschirm (451, 501) überzogen ist, größer ist als ein Bereich der Objektivlinse, und ferner mit einer Abschirmung (458), die zumindest einen Abschnitt des transparenten Schirms überzieht, der die Objektivlinse (316) nicht überzieht.

6. Vorrichtung nach einem der vorhergehenden Ansprüche, wobei der auswechselbare Schutzschirm (451, 501) drehbar ist, sodass, wenn der Abschnitt des transparenten Schirms (451, 501), der die Objektivlinse überzieht, durch Verunreinigungen okkludiert ist, der auswechselbare Schutzschirm (451, 501) gedreht werden kann, sodass ein nicht okkludierter Abschnitt des transparenten Schirms, der vorher mit dem Schirm überzogen war, so positioniert wird, dass die Objektivlinse (316) überzogen ist.

7. Vorrichtung nach einem der Ansprüche 1 bis 5, wobei der auswechselbare Schutzschirm (451, 501) eine Rolle (501) aus flexiblem transparentem Material aufweist, die über die Objektivlinse (316) ausgerollt werden kann, sodass, wenn ein Abschnitt des transparenten Schirms, der die Objektivlinse (316) durch Verunreinigungen okkludiert, ein nicht okkludierter Abschnitt abgerollt und entsprechend positioniert werden kann, um die Objektivlinse (316) zu überziehen.

8. Vorrichtung nach einem der vorhergehenden Ansprüche, wobei die Objektivlinse (316) sich außerhalb der Vakuumkammer (340) befindet und der Laser auf der Probe durch ein transparentes Fenster in der Wand der Vakuumkammer (340) fokussiert wird und wobei der auswechselbare Schutzschirm (451, 501) sich innerhalb der Vakuumkammer (340) befindet und das transparente Fenster während der Laserablation vor Verunreinigungen schützt.

9. Vorrichtung nach einem der vorhergehenden Ansprüche, ferner mit einem Detektor (614, 712), der sich innerhalb der Vakuumkammer (340) befindet, um die Intensität des fokussierten Laserstrahls zu messen, um zu detektieren, wenn der auswechselbare Schutzschirm (451, 501) okkludiert ist.

10. Vorrichtung nach Anspruch 9, ferner mit einem Strahlteiler (714), der auf einem Weg des fokussierten Laserstrahls positioniert ist, um einen Teil des Laserlichtes auf den Detektor (614, 712) zu richten.

11. Verfahren zum Ausführen einer Laserablation in einer Vakuumkammer (340) unter Verwendung eines durch einen Laser (302) erzeugten fokussierten Laserstrahls (303) durch Richten eines Laserstrahls (303) auf eine Probe (320), um einen Bereich der Probe (320) abzutragen,
**dadurch gekennzeichnet, dass**
der Laserstrahl (303) ein Nanosekunden- bis Femtosekunden-Pulslaserstrahl ist und dass das Richten des Laserstrahls (303) auf die Probe umfasst:
Richten des Laserstrahls (303) durch ein transparentes leitfähiges Material, das verhindert, dass Verunreinigungen, die während der Laserablation weggeschleudert werden, auf einem Weg des Laserstrahls (303) optische Komponenten erreichen, und
Ersetzen des okkludierten transparenten leitfähigen Materials durch nicht okkludiertes transparentes leitfähiges Material, ohne die Vakuumkammer zu öffnen, wenn die Anhäufung von Verunreinigungen auf dem transparenten leitfähigen Material so groß wird, dass das transparente leitfähige Material okkludiert.

12. Verfahren nach Anspruch 11, wobei das Ersetzen des okkludierten transparenten leitfähigen Materials durch nicht okkludiertes transparentes leitfähiges Material umfasst: Herausdrehen des okkludierten transparenten leitfähigen Materials aus einer Position zwischen dem Laser (302) und der Probe (320) und Hineindrehen des nicht okkludierten transparenten leitfähigen Materials in die Position zwischen dem Laser (309) und der Probe (320).

13. Verfahren nach Anspruch 11, wobei das Ersetzen des okkludierten transparenten leitfähigen Materials durch nicht okkludiertes transparentes leitfähiges Material umfasst: Herausrollen des okkludierten transparenten leitfähigen Materials aus einer Position zwischen dem Laser (309) und der Probe (320) und Abrollen des nicht okkludierten transparenten Materials von einer Rolle in die Position zwischen dem Laser (309) und der Probe (320).

14. Verfahren nach einem der Ansprüche 11 bis 13, ferner mit dem Schritt: Detektieren einer Intensität des Laserstrahls (303), um zu bestimmen, wann das okkludierte transparente leitfähige Material ersetzt werden soll.

15. Verfahren nach einem der Ansprüche 11 bis 14, ferner mit dem Schritt: Erzeugen und Kollimieren eines Ladungsteilchenstrahls, sodass er auf der Probe (320) in der Vakuumkammer (340) auftrifft.

## Revendications

1. Appareil (300) pour effectuer une ablation au laser dans une chambre à vide (340) comprenant :
un ensemble de laser comportant :
une source de lumière laser (302) ; et
une optique de focalisation (316) pour produire un faisceau laser (303) focalisé à partir de la source de lumière,
l'optique de focalisation comprenant une lentille de focalisation (316) pour focaliser le faisceau laser (303) sur un échantillon (320) dans une chambre à vide (340) ;
un écran de protection pouvant être remplacé positionné entre l'échantillon et la lentille de focalisation de sorte que le faisceau laser (303) focalisé passe à travers l'écran de protection pouvant être remplacé et de sorte que les débris éjectés vers la lentille de focalisation (316) pendant l'ablation au laser de l'échantillon (320) frappent l'écran de protection pouvant être remplacé ;
**caractérisé en ce que** :
la source de lumière (302) est une source d'un faisceau laser pulsé, des nanosecondes aux femtosecondes ;
l'écran de protection pouvant être remplacé (451, 501) est formé à partir d'un matériau conducteur transparent,
l'appareil comprend une colonne de faisceau de particules chargées (308, 309) pour traiter un échantillon dans la chambre à vide.

2. Appareil selon la revendication 1, dans lequel l'écran de protection pouvant être remplacé (451, 501) peut être repositionné sans ouvrir la chambre à vide (340), de sorte que, lorsque le passage de la lumière laser à travers la partie de l'écran de protection pouvant être remplacé (451, 501) recouvrant la lentille de focalisation (316) est occlus au-delà d'un seuil prédéterminé, l'écran de protection pouvant être remplacé (451, 501) puisse être repositionné de sorte qu'une partie non occluse de l'écran de protection pouvant être remplacé (451, 501) recouvre la lentille de focalisation (316).

3. Appareil selon l'une quelconque des revendications précédentes, dans lequel le matériau conducteur transparent comprend un matériau non conducteur revêtu d'une couche d'un conducteur transparent et/ou de graphène, d'oxyde de zinc dopé, d'un film à base de polymère, de Poly 3,4-éthylènedixoythiophène (PEDOT), de PEDOT:polystyrène sulfonate (PEDOT:PSS), ou de Poly(4,4-dioctylcyclopentadithiophène).

4. Appareil selon la revendication 1, dans lequel l'écran de protection pouvant être remplacé (451, 501) comprend un matériau non conducteur comprenant du verre et/ou un plan optique, et le matériau conducteur transparent comprend de l'oxyde d'étain-indium ou de l'oxyde d'étain dopé au fluor.

5. Appareil selon l'une quelconque des revendications précédentes, dans lequel l'aire couverte par l'écran de protection pouvant être remplacé (451, 501) est supérieure à l'aire de la lentille de focalisation, et comprenant en outre un blindage (458) recouvrant au moins une partie de l'écran transparent ne recouvrant pas la lentille de focalisation (316).

6. Appareil selon l'une quelconque des revendications précédentes, dans lequel l'écran de protection pouvant être remplacé (451, 501) peut tourner de sorte que, lorsque la partie de l'écran transparent (451, 501) recouvrant la lentille de focalisation (316) est occluse par des débris, l'écran de protection pouvant être remplacé (451, 501) puisse être tourné de sorte qu'une partie non occluse de l'écran transparent (451, 501) précédemment recouverte par un blindage (458) soit positionnée de manière à recouvrir la lentille de focalisation (316).

7. Appareil selon l'une quelconque des revendications 1 à 5, dans lequel l'écran de protection pouvant être remplacé (451, 501) comprend un rouleau (501) en un matériau transparent souple qui peut défiler à travers la lentille de focalisation (316) de sorte que, lorsqu'une partie de l'écran transparent recouvrant la lentille de focalisation (316) est occluse par des débris, une partie non occluse puisse être déroulée et positionnée de manière à recouvrir la lentille de focalisation (316).

8. Appareil selon l'une quelconque des revendications précédentes, dans lequel la lentille de focalisation (316) est située à l'extérieur de la chambre à vide (340) et le laser est focalisé sur l'échantillon à travers une fenêtre transparente dans la paroi de la chambre à vide (340), et dans lequel l'écran de protection pouvant être remplacé (451, 501) est situé à l'intérieur de la chambre à vide (340) et protège la fenêtre transparente des débris éjectés pendant l'ablation au laser.

9. Appareil selon l'une quelconque des revendications précédentes comprenant en outre un détecteur (614, 712) situé dans la chambre à vide (340) pour mesurer une intensité du faisceau laser focalisé pour déterminer quand l'écran de protection pouvant être remplacé (451, 501) est occlus.

10. Appareil selon la revendication 9, comprenant en outre un diviseur de faisceau (714) positionné dans un trajet du faisceau laser focalisé pour diriger une partie de la lumière laser vers le détecteur (614, 712).

11. Procédé d'exécution d'une ablation au laser dans une chambre à vide (340) en utilisant un faisceau laser (303) focalisé produit par un laser (302) comprenant l'application d'un faisceau laser (303) à un échantillon (320) pour retirer une zone de l'échantillon (320) :
**caractérisé en ce que** :
le faisceau laser (303) est un faisceau laser pulsé, des nanosecondes aux femtosecondes,
et l'application du faisceau laser (303) à l'échantillon (320) comprend l'application du faisceau laser (303) à travers un matériau conducteur transparent qui empêche les débris éjectés pendant l'ablation au laser d'atteindre les composants optiques dans un trajet du faisceau laser (303), et
le remplacement du matériau conducteur transparent occlus par un matériau conducteur transparent non occlus sans ouvrir la chambre à vide alors que l'accumulation de débris sur le matériau conducteur transparent devient suffisante pour occlure le matériau conducteur transparent.

12. Procédé selon la revendication 11, dans lequel le remplacement du matériau conducteur transparent occlus par un matériau conducteur transparent non occlus comprend la rotation du matériau conducteur transparent occlus hors d'une position entre le laser (302) et l'échantillon (320) et la rotation du matériau conducteur transparent non occlus dans la position entre le laser (302) et l'échantillon (320).

13. Procédé selon la revendication 11, dans lequel le remplacement du matériau conducteur transparent occlus par un matériau conducteur transparent non occlus comprend le défilement du matériau conducteur transparent occlus hors d'une position entre le laser (302) et l'échantillon (320), et le défilement du matériau transparent non occlus d'un rouleau dans la position entre le laser (302) et l'échantillon (320).

14. Procédé selon l'une quelconque des revendications 11 à 13, comprenant en outre la détection d'une intensité du faisceau laser (303) pour déterminer quand le matériau conducteur transparent occlus devrait être remplacé.

15. Procédé selon l'une quelconque des revendications 11 à 14, comprenant en outre la génération et la collimation d'un faisceau de particules chargées pour frapper l'échantillon (320) dans la chambre à vide (340).
